# EUROPEAN PATENT APPLICATION

(11) **EP 2 704 071 A1**
(43) Date of publication of application: **05.03.2014**
(21) Application number: 12306040.2
(22) Date of filing: 31.08.2012
(51) Int. Cl.: G06Q 20/00, G07F 7/08, G06Q 40/02

(54) **System and method for secure customization of a personal token during a personalization step**

(71) Applicant: Gemalto SA, 92190 Meudon (FR)
(72) Inventor: Arnald, Valery, 92190 MEUDON (FR); Godbert, Sylvain, 92190 MEUDON (FR)

(57) **Abstract**

The invention relates to a method for issuing a personal token to a cardholder, wherein a Card Management System CMS manages the issuance and administration of the personal token, a Web Site of the institution lets the cardholder customize his personal token, and a personalization unit personalizes the personal token according to CMS data provided by the Card Management System CMS. The Web Site requests the cardholder to enter the customization data which must be present in CMS data for his personal token. The data customized by the cardholder are enciphered and sent to the CMS. The enciphered customized data are inserted into the record created by the CMS as if it was a classic generated data. Therefore, the financial institution does not need to perform significant changes in the CMS. The record created by the CMS is provided to the personalization unit which deciphers the customized data.

## Description

### FIELD OF THE INVENTION

The present invention relates generally to the personalization of personal token, and more particularly to providing security customization of said personal token to a cardholder.

### BACKGROUND OF THE INVENTION

As known in the art, banking institutions willing to issue banking cards typically operate a Card Management System (CMS). A CMS typically manages the issuance and administration of smart card deployments. In particular, a CMS can normally manage the cards as well as data, applets, digital credentials including PKI certificates or other information related to the cards throughout their lifecycle. In general, a CMS minimizes the time and costs associated with deploying and maintaining cards.

A banking institution typically uses a CMS to create a record for each card which has to be personalized, the record comprising information such as the cardholder first and last name, the address of the cardholder, the PIN code etc. The banking institution CMS is typically connected with a personalization unit. The term "personalize" has a specific meaning in the context of smart cards. A personalization unit receives CMS data from the CMS, and based on the data (which comprise the above record), it is able to personalize a card, i.e. to transform a card (typically a white card obtained from a smart card manufacturer, which is generic), into the banking card of a given cardholder, e.g. with the name of the cardholder embossed on the card, the financial institution logo and a card serial number printed on the card body (or other graphical personalization), some key material, the name and the PIN code of the cardholder stored inside the chip of the card (or other electrical personalization), some information relating to the cardholder stored on the magnetic stripe of the card, and possibly all sorts of other elements. The personalization unit can also, once a card is personalized, provides other services such as mailing the card to the cardholder based on address provided by the CMS, or send the PIN of the card to the cardholder (preferably with communication means distinct from those used for sending the card, for security reasons).

In the field of banking cards, the security of the CMS is critical. For example, it should not be possible for a hacker to create fake banking cards, as this could have huge financial consequences. Therefore, it is typically not easy to change anything in a CMS as any change needs to be studied in details in order to check whether or not it may have an impact on security. This is particularly true if the CMS has undergone a security certification, which is typically lost if something is changed in the CMS as certified.

It is typically difficult to modify the CMS, for the above reasons, but also because the CMS is under the control of the financial institution, which may have all sorts of constraints (besides security) which make it difficult to modify it (e.g. lack of resources, other priorities, problem of maintenance contracts which do not allow such changes, especially if the CMS operation is subcontracted, etc.).

Gemalto has proposed several services letting customers customize their banking cards more than what the financial institutions CMS allowed so far. An example of such service is called CardLikeMe, and it allows the cardholder to define the background of his card, e.g. he could decide to print a picture of his dog instead of the default blue background which is common on many banking cards. Such service can also, for example, let the cardholder define his own PIN code instead of having to memorize the PIN defined by the financial institution.

Gemalto has proposed the above services through a distinct mechanism, which is typically a Web Service. The cardholder requesting a banking card can request it as usual from his bank, and in parallel use the Gemalto's Web Service in order to customize the banking card further than what's defined by the bank CMS.

Unfortunately, this poses a problem. The personalization unit receiving the CMS records and the Web Service customized information should be able to reconcile the two sources of information, in order to be able to determine on which banking card it has to print the picture of the dog or to store the PIN code.

In order to associate the outputs of the CMS and the outputs of the Web Service, it has been proposed to compute a card identifier uniquely identifying the card. In state of the art systems, the CMS is the entity which is able to compute this identifier, and it sends it to the Web Service. However, this poses a problem, because this requires a minor modification in the CMS (in order to compute the identifier and transmit it), and even such minor modification can turn out to be impossible or very complex for the above reasons. It has been satisfactory in many instances, but it is often complex to manage. In addition, typical systems impose the communication of personal information between the CMS and the Web Service (e.g. the name of the cardholder), and this may be problematic sometimes (it requires the link to be secured, and if the link is nonetheless cracked, it poses privacy problems and other issues).

Another alternative is described in the document EP 2 141 667 A wherein the personalization unit personalizes the personal token according to data from the CMS and the Web Service. The data provided by the Web Service comprises:
- personal information of the cardholder which is present into the data from the CMS,
- an identifier of the personal token computed from the personal information,
- data customized (like the PIN code).

In this document, the personalization unit is able to associate the outputs of the CMS and the outputs of the Web Service thanks to the personal information of the cardholder into the data from the Web Service

Another alternative would be to let the financial institution deal directly with the customize services. For that, the cardholder requesting a banking card will use the Web site of the financial institution in order to customize the banking card further than what's defined by the bank CMS. The financial institution would need to install a Key Management System (KMS) alongside the Web server to encipher/translate the PIN code customized. This involves significant changes in their system.

Of the various problems in the field, there is a particular need for a system and method for personalizing a personal token such as a banking card in such a way that it allows the cardholder of the personal token to customize its PIN code before personalization, while minimizing the constraints on the issuer of the personal token and on the CMS.

### SUMMARY OF THE INVENTION

The following presents a simplified summary in order to provide a basic understanding of some aspects of the disclosed embodiments. This summary is not an extensive overview and is intended to neither identify key or critical elements nor delineate the scope of such embodiments. Its purpose is to present some concepts in a simplified form as a prelude to the more detailed description that is presented later.

The present invention is directed toward minimizing the constraints to customize a personal token by a cardholder during a personalization step.

The invention relates to a method for issuing a personal token to a cardholder, wherein a Card Management System CMS manages the issuance and administration of the personal token, a Web site of the institution lets the cardholder customize his personal token, and a personalization unit personalizes the personal token according to CMS data provided by the Card Management System CMS. The financial institution's Web site requests the cardholder to enter the customization data which must be present in CMS data for his personal token. The data customized by the cardholder are enciphered and sent to the CMS. The enciphered customized data are inserted into the record created by the CMS as if it was a classic generated data. Therefore, the financial institution does not need to perform significant changes in the CMS. The record created by the CMS is provided to the personalization unit which deciphers the customized data.

Therefore, the present invention provides a system for facilitating secure customization of a personal token that are easily and readily adaptable to existing personalization processing token.

With the present invention, it is no need to match an identifier of the personal token during data processing in the personalization unit as in the art.

The present invention is defined, in its broadest sense, as a method for issuing a personal token to a cardholder, wherein:
- a Card Management System manages the issuance and administration of said personal token,
- a Web site of an institution lets the cardholder customize his personal token, said institution operating said Card Management System,
- and a personalization unit personalizes the personal token according to CMS data provided by the Card Management System,
   **characterized in that**
- the customization data entered by the cardholder by the way of the Web Site is enciphered and sent to the CMS,
- the enciphered customization data is inserted into a record created by the CMS, said record comprising CMS data,
- the record created by the CMS is provided to the personalization unit which deciphers the customized data.

The present invention also relates to a system comprising means to execute the present invention.

### BRIEF DESCRIPTION OF THE DRAWINGS

The invention and its advantages will be explained more in details in the following specification referring to the appended drawings, in which
Figure 1 represents a preferred system according to an embodiment of the present invention;
Figure 2 illustrates the different steps of the method according to an embodiment of the present invention.

### DETAILED DESCRIPTION OF THE EMBODIMENTS OF THE INVENTION

The same elements have been designated with the same reference numerals in the different drawings. For clarity, only those elements and steps which are useful to the understanding of the present invention have been shown in the drawings and will be described.

For the sake of brevity, conventional data networking, application development and other functional aspects of the systems (and components of the individual operating components of the systems) may not be described in detail herein. In particular, the resources used by a terminal, an institution, a Web Site, a CMS, a personal token issuer have not been detailed, the present invention being compatible with any current use of a hardware or software resource. In an embodiment, the institution, the Web Site, the CMS and the personal token issuer are hosted by a server.

Furthermore, the connecting lines shown in the various figures contained herein are intended to represent exemplary functional relationships and/or physical couplings between the various elements. It should be noted that many alternative or additional functional relationships or physical connections may be present in a practical system.

Moreover, when an action is said to be performed by a terminal, it is in fact executed by a microprocessor in this terminal, controlled by instruction codes recorded in a program memory on the said terminal. An action is also ascribed to an application or software. This means that part of the instruction codes making up the application or software are executed by the microprocessor.

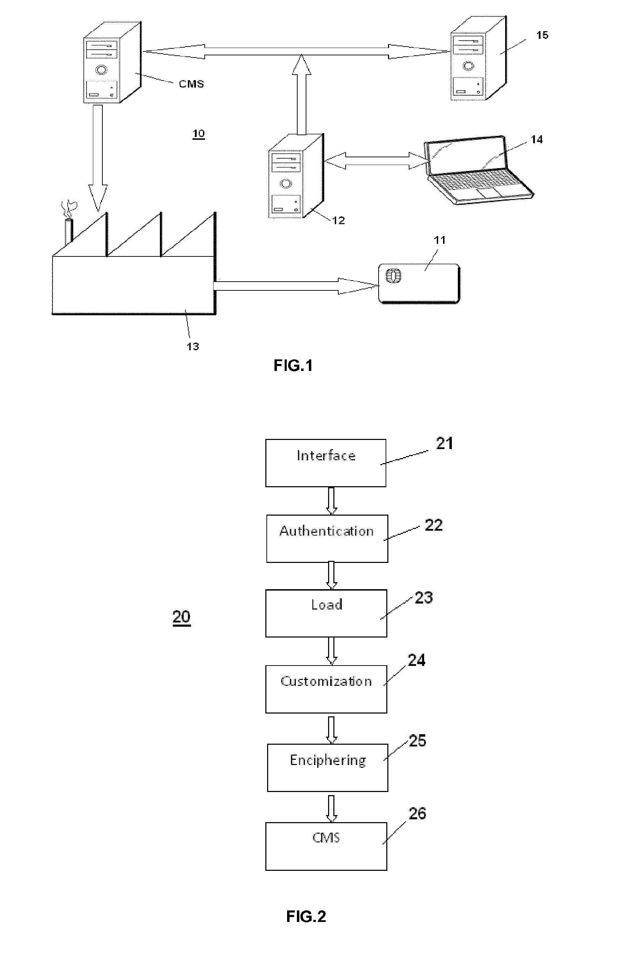

FIG. 1 schematically shows a system 10 for issuing a personal token 11 to a cardholder. The personal token 11 is preferably a banking card, but could also be any kind of token like USB key, a card, a PIN pad...

The system 10 comprises an institution 12 which uses a Card Management System CMS to create a record for each personal token 11 which has to be personalized, the record comprising information such as the card holder first and last name, the address of the card holder, the PIN code etc. The institution 12 can be a banking institution or any financial institution.

The CMS of the institution 12 is connected to a personalization unit 13. The term "personalize" has a specific meaning in the context of smart cards. The personalization unit 13 receives CMS data from the CMS, and based on the data (which comprise the above record), it is able to personalize the personal token 11. CMS data may comprise in particular some cryptographic keys (e.g. 3DES, AES, and/or RSA keys), some serial numbers, some dates, the first and last name of the cardholder, the type of personal token 11 requested (e.g. regular bank card, gold card, platinum card, etc.), the data customized by the cardholder like the PIN code, the PUK code, pictures to be printed on the card body....

Therefore, the Personalization unit 13 transforms a card (typically a white card obtained from a smart card manufacturer, which is generic), into the banking card of a given cardholder with the received CMS data e.g. with the name of the cardholder embossed on the card, the financial institution logo and a card serial number printed on the card body (or other graphical personalization), some key material, the name and the PIN code of the cardholder stored inside the chip of the card (or other electrical personalization), some information relating to the cardholder stored on the magnetic stripe of the card, and possibly all sorts of other elements.

The institution 12 comprises a Web Site which is set to request the cardholder to customize its personal token 11 The Web site is hosted on at least one web server of the institution, accessible via a network such as the Internet or a private local area network through an Internet address known as a Uniform Resource Locator. A terminal 14 of the cardholder is connected to the Web Site via Internet. The terminal 14 can for instance be a mobile phone, a PDA, a tablet computer, a Laptop, a computer or a notebook.

This is advantageous as it allows the cardholder to customize his personal token from virtually anywhere, e.g. by connecting to the Institution's Web Site from the terminal 14 (his personal computer PC) through the Internet. In a preferred embodiment, the customization process is available only in the environment of the institution 12 which is presumably more secure than his own personal terminal 14 (the personal terminal could be infested with viruses etc.). This environment could be the Web Site itself (the cardholder could have direct access to the server hosting the Web Site), or the environment of a specific terminal connecting to the server hosting the Web Site.

In another embodiment, the cardholder can customize his personal token through a Web Service of an issuer of Services Company. In an embodiment, the issuer of Services Company can be Gemalto. It should be understood as "Web service" an external Web site hosted by the issuer of services company, which is generally integrated into the institution's (bank's) Web site using technology such as iFrame, browser redirection or cross-domain client components (e.g. Javascript or Adobe Flash Animation). The cardholder requesting a banking card can request it as usual from his bank and in parallel use the Gemalto's Web Service in order to customize the banking card.

FIG. 2 shows a flow chart 20 of an embodiment of a customizing process of the personal token 11 according to an implemented invention.

At a first step 21, the cardholder interfaces with the institution 12 by way of the Web Site. Transmissions between cardholder and the Web Site can incorporate any number of well known security schemes.

When, at step 22, a request to access the customization page is received from the terminal 14, institution's Web Site invokes an authentication process to verify the identity of the cardholder. Cardholder enters authentication data at institution's Web Site which transmits the authentication data to the institution 12 which queries authentication data base for corresponding credentials. At step 23, when cardholder is authenticated a security Web page from a Web site server 15 is loaded.

At step 24, the cardholder starts the customization process of the personal token by way of the security Web page. Thanks to a virtual keyboard generated by this page or a keyboard of the terminal 14, the cardholder selects the data to be customized. In the embodiment described below the customized data is the PIN code by knowing that it can be the PUK code, pictures to be printed on the card body... the list is not exhausted.

The cardholder enters his PIN code and presses the validate button of the keyboard. Subsequently to pressing validate, the security Web page enciphers, at step 25, the entered PIN with a key according to any algorithm deemed appropriate. In an embodiment the key is a secret key shared between the personalisation unit 13 and the Web site server 15. In this case symmetrical algorithms can be used to encipher the entered PIN code. In another embodiment, the entered PIN is enciphered with a public key of the personalisation unit 13 with an asymmetrical algorithm. In this case, the private part is kept in the personalisation unit 13.

According to an embodiment of the present invention, the enciphering key and/or the enciphering algorithm may be dynamically retrieved by the terminal or the Web site server 15 from an external Web Server when the web page is loaded at step 23.

The enciphered PIN is then, at step 26, transferred to the CMS by the Web site server 15. Upon reception, the enciphered PIN is inserted into the record created by the CMS. This record is sent to the personalization unit 13 that deciphers the PIN with the key shared or with its private key associated to the public key.

In another embodiment, at step 23, when cardholder is authenticated a personalization Web page from the institution's Web site is loaded. The cardholder, thanks to a virtual keyboard generated by this page or a keyboard of the terminal 14, enters, at step 24, the PIN code to be customized and presses the validate button of the keyboard. Subsequently to pressing validate, the institution's Web site enciphers, at step 25, the entered PIN with preferably a public key of the personalisation unit 13. The enciphered PIN is then transferred, at step 26, to the CMS and inserted into the record. This file is sent to the personalization unit that deciphers the PIN with the corresponding private key.

This allows the system 10 to work without having to change anything on the Card Management System CMS previously in place.

## Claims

1. Method for issuing a personal token (11) to a cardholder, wherein:
- a Card Management System (CMS) manages the issuance and administration of said personal token,
- a Web Site of an institution (12) lets the cardholder customize his personal token, said institution operating said Card Management System,
- and a personalization unit (13) personalizes the personal token according to CMS data provided by the Card Management System, **characterized in that**
- the customization data entered by the cardholder by the way of the Web Site is enciphered and sent to the CMS,
- the enciphered customization data is inserted into a record created by the CMS, said record comprising CMS data,
- the record created by the CMS is provided to the personalization unit which deciphers the customized data.

2. Method according to the previous claim, wherein when the Web Site receives an access request to a customization page from a terminal (14) of the cardholder a security Web page from a Web site server (15) is loaded, wherein by the way of said security Web page
- the cardholder enters and validates the data to be customized,
- the customized data is enciphered and sent to the CMS.

3. Method according to claim 1, wherein a customization Web page from the institution's Web Site is loaded when an access request is received from a terminal (14) of the cardholder, wherein by the way of said customization Web page
- the cardholder enters and validate the data to be customized,
- the customized data is enciphered and sent to the CMS.

4. Method according to claim 2 to 3, wherein when the access request to the customization page is received from the terminal an authentication process of the cardholder is executed.

5. Method according to any previous claim, wherein the customized data is enciphered with a key shared with the personalization unit.

6. Method according to claims 1 to 4, wherein the customized data is enciphered with the public key of the personalization unit.

7. Method according to claims 1 to 4, wherein the customized data is enciphered with an enciphering key and/or an enciphering algorithm is dynamically retrieved by the terminal or the Web site server from an external Web Server.

8. Method according to any previous claim, wherein the customized data is a PIN code, a PUK code or pictures to be printed on the card body.

9. System (10) for issuing a personal token (11) to a cardholder, the system comprising means to perform a method for customizing data entered by the cardholder according to any previous claim.
